# EUROPEAN PATENT APPLICATION

(11) **EP 1 533 356 A1**
(43) Date of publication of application: **25.05.2005**
(21) Application number: 03078694.1
(22) Date of filing: 24.11.2003
(51) Int. Cl.: C09K 3/18, D06M 15/256, D06M 15/277

(54) **Fluorochemical composition for rendering substrates oil and/or water repellent**

(71) Applicant: 3M Innovative Properties Company, St. Paul, Minnesota 55133-3427 (US)
(72) Inventor: Audenaert, Frans c/o 3M Europe s.a., 1831 Diegem (BE); Lens, Hugo c/o 3M Europe s.a., 1831 Diegem (BE); Allewaert, Kathy c/o 3M Europe s.a., 1831 Diegem (BE)
(74) Representative: Voortmans, Gilbert J.L.

(57) **Abstract**

The present invention provides a composition comprising an aqueous dispersion of a fluorochemical compound and a cationic surfactant and wherein the composition further comprises colloidal inorganic particles.

## Description

### 1. Field of the invention

The present invention relates to a fluorochemical composition for treating substrates, in particular fibrous substrates such as textile, non-wovens and leather to render the latter oil-and/or water repellent. The invention further relates to a method of treatment of a substrate with the composition.

### 2. Background of the invention

Compositions for making substrates, in particular fibrous substrates, such as textiles, oil-and water repellent have been long known in the art. Fluorochemical compounds have been well known as being highly effective in providing oil and water repellency to substrates and in particular textile substrates. A variety of fluorochemical compositions are known and have been used to render substrates oil- and/or water repellent. For example, the fluorochemical composition may be based on fluorochemical acrylates or methacrylates that are derived from the polymerization of an acrylate or methacrylate monomer that has a fluorinated group and optionally one or more non-fluorinated monomers. Such compositions have been described in for example US 3,660,360, US 5,876,617, US 4,742,140, US 6,121,372 and US 6,126,849 and EP 1 329 548.

Alternatively, the fluorochemical compound contained in the fluorochemical composition may be derived from a condensation reaction of a fluorochemical compound having a isocyanate reactive group such as e.g. a hydroxy group and a polyisocyante compound and optional non-fluorinated co-reactants as disclosed in e.g. US 5,910,557.

US 6,525,127 discloses fluorochemical compositions that are based on a fluorochemical compound comprising: a fluorochemical oligomeric portion comprising an aliphatic backbone with a plurality of pendant fluoroaliphatic groups, each fluoroaliphatic group having a fully fluorinated terminal group and each independently linked to a carbon atom of the aliphatic backbone through an organic linking group; an aliphatic moiety; and a linking group which links the fluorochemical oligomeric portion to the aliphatic moiety. The compositions are taught to provide desirable oil, water and stain repellency to fibrous substrates.

The known fluorochemical compositions are available both as solutions or dispersions in an organic solvent as well as aqueous based compositions wherein the fluorochemical composition is dispersed in an aqueous medium. Water based compositions are generally preferred from an environmental point of view and the fluorochemical compound may be dispersed in water in a variety of ways depending on the chemical structure of the fluorochemical compound.

For example, the fluorochemical compound may include a water solubilizing group that renders the compound self-dispersible in water. As an example thereof, US 5,370,919 discloses compositions having a water soluble or dispersible fluoroaliphatic radical-containing poly(oxyalkylene) compound for treating a fibrous substrate and render the latter oil- and water repellent as well as to provide stain resistance to the substrate. The composition also includes an anti-soiling agent such as colloidal silica or an alumina sol.

Alternatively, the fluorochemical compound may be dispersed in water with the aid of a surfactant. For example, US 5,760,126 disclose a composition that includes a polymer that has anionic moieties for use as a surfactant in the composition. The composition further also includes colloidal silica to provide a composition that can yield hard coatings that have a low surface energy and high abrasion resistance. Similar compositions are disclosed in US 5,888,290 and US 6,201,056.

In many commercially available aqueous fluorochemical compositions the fluorochemical compound is dispersed in water with the aid of a cationic surfactant. Such compositions have been found to present problems in certain application methods. In particular, in an application where the fluorochemical composition is applied by contacting the substrate with the composition in a bath and then guiding the substrate through a set of rolls, deposition may occur on the rolls after some time of applying the composition to the substrate. This is undesirable as it will require the application to be interrupted to clean the rolls which adds to the manufacturing cost of a treated substrate. This problem is further dependent on the nature of the fluorochemical as well as the nature of the substrate being treated with some substrates and fluorochemical compositions causing the problem more quickly to occur than others. The problem can be reduced by increasing the amount of surfactant in the composition thereto. However, increasing the surfactant level has been found to adversely affect the repellency performance of the composition.

Accordingly, it would be desirable to reduce or even eliminate the aforementioned problem. Preferably a solution to the problem will be environmentally friendly and cost effective. Preferably, the oil- and/or water repellency properties that can be obtained on a substrate with the composition should not be adversely affected when reducing or eliminating the problem of roll deposit.

### 3. Summary of the invention

In one aspect, the present invention provides a composition comprising an aqueous dispersion of a fluorochemical compound and a cationic surfactant wherein the composition further comprises colloidal inorganic particles.

It has been found that the presence of colloidal inorganic particles reduces and in some embodiments even eliminates the problem of roll deposits mentioned above. Also, the colloidal inorganic particles generally do not negatively affect the oil- and/or water repellency properties that can be imparted on a substrate treated with the composition.

In a further aspect, the present invention provides a method of treatment comprising applying a composition as described above to a fibrous substrate such as textile, non-wovens or leather. In particular, the compositions have been found to be suitable for use in an application method where the substrate is guided through rolls.

### 4. Detailed description of the invention

The colloidal inorganic particles for use in the present invention typically have an average particle diameter (generally number average) of between 1 and 200nm, typically between 2 and 100nm and preferably between 2 and 50nm. By the term 'inorganic particles' is meant that the particles are of an inorganic nature without however excluding particles that are partially modified with organic groups such as hydrocarbon groups e.g. at the surface of the inorganic particles to render them hydrophobic. Suitable colloidal inorganic particles include cationic colloidal inorganic particles. By the term "cationic colloidal inorganic particles" is meant that the colloidal inorganic particles are stabilized in the dispersion by cationic charges typically on their surface. In one embodiment, these cationic charges may result from positively charged metal ions included in the inorganic particle. In another embodiment, the cationic charges may result from an organic modification of the inorganic particles whereby an organic moiety having a cationic group, e.g. an ammonium group, is chemically bonded to the inorganic particle. In a still further embodiment, the inorganic particle may be hydrophobized through modification with one or more organic groups such as a hydrocarbon group, including for example a linear or branched aliphatic group having 1 to 30 carbon atoms and may then be stabilized with a cationic surfactant. Alternatively, hydrophobically modified inorganic particles may be stabilized with a non-ionic surfactant. Generally, the colloidal inorganic particle will be stabilized with cationic charges that are chemically linked to the particle.

Particularly suitable cationic colloidal inorganic particles include colloidal silica particles that comprise aluminium oxide. The aluminium oxide in the colloidal silica particles is thought to provide positive charges through the aluminum atoms. Commercially available cationic colloidal silica particles include those available from Nalco Chemical Co. as NALCO™ 1056. Still further cationic inorganic particles that can be used include alumina sols, zirconia sols, cationically emulsified silylsesquioxanes as well as hydrophobically modified colloidal silica particles that are emulsified with a cationic surfactant.

The colloidal inorganic particles are typically used in an amount of 0.25 to 25 parts, preferably between 0.5 and 10 parts by weight per 100 parts by weight of the fluorochemical compound in the composition.

Any of the well-known fluorochemicals that are capable of imparting water and oil repellency can be used in the compositions of the invention. Suitable fluorochemicals include any of the fluorochemical group-containing organic compounds including polymeric and oligomeric compounds known in the art to impart water and oil repellency to substrates. These polymeric and oligomeric fluorochemical treatments typically comprise one or more fluorochemical groups that contain a perfluorinated carbon chain having from 3 to about 20 carbon atoms, typically from about 4 to about 14 carbon atoms. These fluorochemical groups can contain straight chain, branched chain, or cyclic fluorinated alkylene groups or any combination thereof. The fluorochemical groups are preferably free of polymerizable olefinic unsaturation but can optionally contain catenary (i.e., in-chain, bonded only to carbon) heteroatoms such as oxygen, divalent or hexavalent sulfur, or nitrogen. Fully-fluorinated groups are preferred, but hydrogen or chlorine atoms can also be present as substituents, provided that no more than one atom of either is present for every two carbon atoms. It is additionally preferred that any fluorochemical group contain from about 40% to about 80% fluorine by weight, more preferably about 50% to about 78% fluorine by weight. The terminal portion of the group is generally fully-fluorinated, preferably containing at least 7 fluorine atoms. Perfluorinated aliphatic groups (i.e., those of the formula CₙF₂ₙ₊₁-) are the most preferred fluorochemical groups.

Representative examples of suitable fluorochemicals include fluorochemical urethanes, ureas, esters, ethers, alcohols, epoxides, allophanates, amides, amines (and salts thereof), acids (and salts thereof), carbodiimides, guanidines, oxazolidinones, isocyanurates, biurets, acrylate and methacrylate homopolymers and copolymers, and mixtures thereof.

Representative fluorochemical group-containing polymers useful in the present invention include fluorochemical acrylate and methacrylate homopolymers or copolymers containing fluorochemical acrylate monomers interpolymerized with monomers such as methyl methacrylate, butyl acrylate, octadecylmethacrylate, acrylate and methacrylate esters of oxyalkylene and polyoxyalkylene polyol oligomers (e.g., diethylene glycol dimethacrylate, polyethylene glycol dimethacrylate, polyethylene oxide diacrylate, and polyethylene glycol monoacrylate), glycidyl methacrylate, ethylene, butadiene, styrene, isoprene, chloroprene, vinyl acetate, vinyl chloride, vinylidene chloride, vinylidene fluoride, acrylonitrile, vinyl chloroacetate, vinylpyridine, vinyl alkyl ethers, vinyl alkyl ketones, acrylic acid, methacrylic acid, 2-hydroxyethylacrylate, N-methylolacrylamide, 2-(N,N,N-trimethylammonium)ethyl methacrylate, and 2-acrylamido-2-methylpropanesulfonic acid (AMPS). The relative amounts of various comonomers used can generally be selected empirically, depending on the substrate to be treated, the properties desired, and the mode of application to the substrate. Useful fluorochemical treatments also include blends of the various fluorochemicals described above.

In one particular embodiment, the fluorochemical compound comprises a fluorinated polymer comprising fluorinated repeating units derived from fluorinated monomers corresponding to the formula:

R_{f}-X-OC(O)-C(R)=CH₂ (I)

wherein R_{f} represents a perfluorinated aliphatic group having 3 or 4 carbon atoms, X is an organic divalent linking group, and R represents hydrogen or a lower alkyl group having 1 to 4 carbon atoms.

The linking group X links the perfluoroaliphatic group R_{f} to the free radical polymerizable group. Linking group X is generally non-fluorinated and preferably contains from 1 to about 20 carbon atoms. X can optionally contain oxygen, nitrogen, or sulfur-containing groups or a combination thereof, and X is free of functional groups that substantially interfere with free-radical polymerization (e.g., polymerizable olefinic double bonds, thiols, and other such functionality known to those skilled in the art). Examples of suitable linking groups X include straight chain, branched chain or cyclic alkylene, arylene, aralkylene, sulfonyl, sulfoxy, sulfonamido, carbonamido, carbonyloxy, urethanylene, ureylene, and combinations thereof such as sulfonamidoalkylene.

Specific examples of fluorinated monomers include:

CF₃CF₂CF₂CF₂CH₂CH₂OCOCR¹=CH₂

CF₃(CF₂)₃CH₂OCOCR¹=CH₂

CF₃(CF₂)₃SO₂N(CH₃)CH₂CH₂OCOCR¹=CH₂

CF₃(CF₂)₃SO₂N(C₂H₅)CH₂CH₂OCOCR¹=CH₂

CF₃(CF₂)₃SO₂N(CH₃)CH₂CH(CH₃)OCOCR¹=CH₂

(CF₃)₂CFCF₂SO₂N(CH₃)CH₂CH₂OCOCR¹=CH₂

wherein R¹ is hydrogen or methyl.

The fluorinated monomer according to formula (I) or mixture thereof is typically used in amounts such that the amount of the corresponding units thereof in the polymer is between 10 and 97 mole%, preferably between 25 and 97 mole %, more preferably between 25 mole % and 85 mole %, most preferably between 25 mole % and 75 mole %.

The fluorinated monomer according to formula (I) is generally copolymerized with one or more non-fluorinated monomers. In one embodiment, at least part of the non-fluorinated monomers is selected from chlorine containing monomers such as vinyl chloride and vinylidene chloride. Repeating units of such chlorine containing monomers, when present, are preferably contained in the fluorinated polymer in an amount between 3 and 75 mole %.

Further non-fluorinated comonomers, other than the chlorine containing monomers referred to above, include hydrocarbon group containing monomers such as monomers that can be represented by formula :

Rₕ-L-Z (II)

wherein Rₕ represents an aliphatic group having 4 to 30 carbon atoms, L represents an organic divalent linking group and Z represents an ethylenically unsaturated group.
The hydrocarbon group is preferably selected from the group consisting of a linear, branched or cyclic alkyl group, an aralkyl group, an alkylaryl group and an aryl group. Further non-fluorinated monomers include those wherein the hydrocarbon group in formula (II) includes oxyalkylene groups or substituents, such as hydroxy groups and/or cure sites.

Examples of non-fluorinated comonomers include hydrocarbon esters of an α,β-ethylenically unsaturated carboxylic acid. Examples include n-butyl(meth)acrylate, isobutyl(meth)acrylate, octadecyl(meth)acrylate, lauryl(meth)acrylate, cyclohexyl (meth)acrylate, cyclodecyl (meth)acrylate, isobornyl (meth)acrylate, phenyl (meth)acrylate, benzyl (meth)acrylate, adamantyl (meth)acrylate, tolyl (meth)acrylate, 3,3-dimethylbutyl (meth)acrylate, (2,2-dimethyl-1-methyl)propyl (meth)acrylate, cyclopentyl (meth)acrylate, 2-ethylhexyl (meth)acrylate, t-butyl (meth)acrylate, cetyl (meth)acrylate, stearyl (meth)acrylate, behenyl (meth)acrylate, isooctyl (meth)acrylate, n-octyl (meth)acrylate, 4-ethyl-cyclohexyl (meth)acrylate, 2-ethoxyethyl methacrylate and tetrahydropyranyl acrylate.

Further non-fluorinated comonomers include allyl esters such as allyl acetate and allyl heptanoate; alkyl vinyl ethers or alkyl allyl ethers such as cetyl vinyl ether, dodecylvinyl ether, ethylvinyl ether; unsaturated acids such as acrylic acid, methacrylic acid, alpha-chloro acrylic acid, crotonic acid, maleic acid, fumaric acid, itaconic acid and their anhydrides and their esters such as vinyl, allyl, methyl, butyl, isobutyl, hexyl, heptyl, 2-ethylhexyl, cyclohexyl, lauryl, stearyl, isobornyl or alkoxy ethyl acrylates and methacrylates; alpha-beta unsaturated nitriles such as acrylonitrile, methacrylonitrile, 2-chloroacrylonitrile, 2-cyanoethyl acrylate, alkyl cyanoacrylates; alpha,beta-unsaturated carboxylic acid derivatives such as allyl alcohol, allyl glycolate, acrylamide, methacrylamide, n-diisopropyl acrylamide, diacetoneacrylamide, aminoalkyl (meth)acrylates such as N,N-diethylaminoethylmethacrylate, N-t-butylaminoethylmethacrylate; alkyl(meth)acrylates having an ammonium group such as (meth)acrylates of the formula X- R₃N⁺-R^{a}-OC(O)-CR¹=CH₂ wherein X⁻ represents an anion such as e.g. a chloride anion, R represents hydrogen or an alkyl group and each R may be the same or different, R^{a} represents an alkylene and R¹ represents hydrogen or methyl; styrene and its derivatives such as vinyltoluene, alpha-methylstyrene, alpha-cyanomethyl styrene; lower olefinic hydrocarbons which can contain halogen such as ethylene, propylene, isobutene, 3-chloro-1-isobutene, butadiene, isoprene, chloro and dichlorobutadiene and 2,5-dimethyl-1,5-hexadiene, hydrocarbon monomers comprising (poly)oxyalkylene groups including (meth)acrylates of a polyethylene glycol, (meth)acrylates of a block copolymer of ethylene oxide and propylene oxide, (meth)acrylates of amino- or diamino terminated polyethers and (meth)acrylates of methoxypolyethyleneglycols and hydrocarbon monomers comprising a hydroxyl group include hydroxylgroup containing (meth)acrylates, such as hydroxyethyl(meth)acrylate and hydroxypropyl(meth)acrylate.

In a particular embodiment of the invention, the fluorinated polymer comprising units deriving from a monomer according to formula (I) further includes units having one or more cure sites. These units will typically derive from corresponding comonomers that include one or more cure sites. By the term 'cure site' is meant a functional group that is capable of engaging in a reaction with the substrate to be treated. Examples of cure sites include acid groups such as carboxylic acid groups, hydroxy groups, amino groups and isocyanate groups or blocked isocyanate groups. Examples of comonomers from which a cure site unit may derive include (meth)acrylic acid, maleic acid, maleic anhydride, allyl methacrylate, hydroxybutyl vinyl ether, N-hydroxymethyl (meth)acrylamide, N-methoxymethyl acrylamide, N-butoxymethyl acrylamide, N-isobutoxymethyl acrylamide, glycidylmethacrylate and α,α dimethyl m. isopropenyl benzyl isocyanate . Other examples include polymerizable urethanes, that can be obtained by the reaction of a polymerizable mono-isocyanate with an isocyanate blocking agent or by the reaction of a di- or polyisocyanate and a hydroxy or amino-functionalized acrylate or methacrylate and an isocyanate blocking agent. Isocyanate blocking agents are compounds that upon reaction with an isocyanate group yield a group that is unreactive at room temperature with compounds that at room temperature normally react with an isocyanate but which group at elevated temperature reacts with isocyanate reactive compounds. Generally, at elevated temperature the blocking group will be released from the blocked (poly)isocyanate compound thereby generating the isocyanate group again which can then react with an isocyanate reactive group. Blocking agents and their mechanisms have been described in detail in "Blocked isocyanates III.: Part. A, Mechanisms and chemistry" by Douglas Wicks and Zeno W. Wicks Jr., Progress in Organic Coatings, 36 (1999), pp. 14-172.

The blocked isocyanate may be aromatic, aliphatic, cyclic or acyclic and is generally a blocked di- or triisocyanate or a mixture thereof and can be obtained by reacting an isocyanate with a blocking agent that has at least one functional group capable of reacting with an isocyanate group. Preferred blocked isocyanates are blocked polyisocyanates that at a temperature of less than 150°C are capable of reacting with an isocyanate reactive group, preferably through deblocking of the blocking agent at elevated temperature. Preferred blocking agents include arylalcohols such as phenols, lactams such as ε-caprolactam, δ-valerolactam, γ-butyrolactam, oximes such as formaldoxime, acetaldoxime, methyl ethyl ketone oxime, cyclohexanone oxime, acetophenone oxime, benzophenone oxime, 2-butanone oxime or diethyl glyoxime. Particular examples of comonomers having a blocked isocyanate group as the cure site include the reaction product of a di-isocyanate, 2-hydroxyethyl(meth)acrylate and 2-butanone oxime or the reaction product of a di-isocyanate, a mono(meth)acrylate of a polyethylene glycol and 2-butanone oxime and the reaction product of a triisocyanate, 1 equivalent of 2-hydroxyethyl(meth)acrylate and 2 equivalents of 2-butanone oxime and the reaction product of α,α-dimethyl m. isopropenyl benzyl isocyanate with 2-butanone oxime.
In yet a further embodiment in connection with the present invention, the fluorochemical compound used in the composition is an alkylated fluorochemical oligomer as disclosed in US 6,525,127. The alkylated fluorochemical oligomers disclosed in this US patent comprise:
(i) a fluorochemical oligomeric portion comprising an aliphatic backbone with a plurality of fluoroaliphatic groups attached thereto, each fluoroaliphatic group having a fully fluorinated terminal group and each independently linked to a carbon atom of the aliphatic backbone through an organic linking group;
(ii) an aliphatic moiety having at least 12 carbon atoms; and
(iii) a linking group which links the fluorochemical oligomeric portion to the aliphatic moiety.

Generally, the amount of fluorinated compound contained in the treating composition is between 0.1 and 4% by weight, preferably between 0.5 and 3% by weight based on the total weight of the fluorochemical composition. Higher amounts of fluorinated compound of more than 4% by weight, for example up to 10% by weight may be used as well, particularly if the uptake of the fluorochemical composition by the substrate is low. Generally, the fluorochemical treating composition will be prepared by diluting a more concentrated fluorochemical composition to the desired level of fluorinated compound in the treating composition. The concentrated fluorochemical composition can contain the fluorinated compound in an amount of up to 70% by weight, typically between 10% by weight and 50% by weight.

The cationic surfactant for use in the composition is typically an ammonium group containing surfactant although other cationic group containing surfactants can be used as well. In a particular embodiment in connection with the present invention, the cationic surfactant corresponds to the formula: 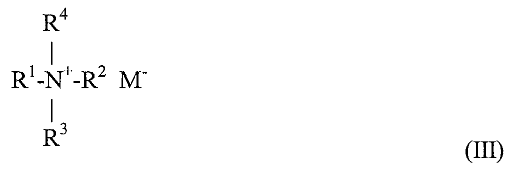 wherein R³ and R⁴ each independently represents a hydrocarbon group having 1 to 30 carbon atoms, preferably between 4 and 18 carbon atoms, at least one of R³ and R⁴ having at least 6 carbon atoms, R¹ and R² each independently represents hydrogen, an alkyl group having 1 to 3 carbon atoms or a polyoxyalkylene group or R¹ and R² may together with N⁺ form a ring and M⁻ represents a counter ion such as for example Cl⁻, Br⁻, OH⁻ or ½ SO₄²⁻.

The hydrocarbon group R³ and/or R⁴ may be a linear, branched or cyclic aliphatic group or the hydrocarbon group may comprise aromatic groups such as for example a benzyl group. R¹ and/or R² may represent a polyoxyalkylene group. Such a polyoxyalkylene group may be a homo-polyoxyalkylene such as polyoxyethylene or may be a copolyoxyalkylene such as a polyoxyalkylene group consisting of oxyethylene and oxypropylene units. Generally, the oxyalkylene groups of the polyoxyalkylene group will have 2, 3 or 4 carbon atoms and the number of oxyalkylene units in the polyoxyalkylene group will be between 1 and 15, preferably between 1 and 8 units. A single cationic surfactant according to formula (III) may be used as well a mixture of cationic surfactants according to formula (III) or a mixture with other cationic surfactants.

Commercially available cationic surfactants that can be used include Arquad™ T-50, Arquad™ MCB-50, Ethoquad™ C-12 and Ethoquad™ 18-25 from Akzo-Nobel. Generally, the cationic surfactant will be used in an amount of 0.01% to 1%, preferably in an amount of 0.05 to 0.5% based on total weight of the aqueous composition.

In addition to the fluorochemical compound, cationic surfactant and colloidal inorganic particles, the composition may contain further optional additives. For example, the composition may contain so-called extender compounds. Extenders are typically non-fluorinated compounds that improve the efficiency of the fluorochemical compound in the composition to provide the desired repellency properties such that either a lower amount of the fluorochemical compound can be used or improved repellency properties are obtained.

Examples of extender compounds, include siloxanes, (meth)acrylate and substituted acrylate polymers and copolymers, N-methylolacrylamide-containing acrylate polymers, urethanes, blocked isocyanate-containing polymers and oligomers, condensates or precondensates of urea or melamine with formaldehyde, glyoxal resins, condensates of fatty acids with melamine or urea derivatives, condensates of fatty acids with polyamides and their epichlorohydrin adducts, waxes, polyethylene, chlorinated polyethylene, alkyl ketene dimers, esters, and amides. Blends of these fluorine-free extender compounds can also be used. When present, the extender compounds can be comprised in the composition in an amount of 0.1 to 10%, generally 0.5 to 5%.

The composition of the invention will typically have a total amount of solids of 0.5 to 40% by weight. The fluorochemical compound generally comprises 25 % to 99 % of the solids. A composition ready for use in a treatment of a substrate will generally have between 0.25 and 10 % by weight of solids. Compositions having a higher amount of solids can be used as concentrates and are conveniently diluted with water prior to use in a treatment method.

The composition of the invention can be used to treat a substrate, in particular a fibrous substrate to render it oil- and/or water repellent. Fibrous substrates that may be treated with the composition include textile, non-woven substrates and leather. The fibrous substrate may be based on synthetic fibers including for example polyester fibers, acrylic fibers and polyamide fibers as well as natural fibers such as cellulose fibers. The fibrous substrate may further comprise a mixture of different fibers including mixtures of synthetic and natural fibers as for example a mixture of polyester and cellulose fibers or mixtures of synthetic fibers such as a mixture of polyester and polyamide fibers.

The composition is generally applied to a substrate in an amount effective to obtain a desired level of oil- and/or water repellency properties. Typically, the composition should be applied in an amount such that the amount of fluorochemical compound on the substrate is between 0.1 and 3% by weight based on the weight of the substrate, preferably between 0.2 and 1% by weight. The composition may be applied by any of the application techniques used to apply fluorochemical compositions to a substrate, in particular a fibrous substrate. The composition in accordance with the present invention is particularly suitable for use in an application method where the composition is applied to the substrate by contacting the substrate with the composition in a bath that contains the composition and wherein the substrate is guided over one or more rolls. Typically, such rolls are configured so as to squeeze excess treatment composition from the substrate.

Following application of the composition to the substrate, the substrate will generally be dried. The substrate may be dried at ambient conditions by leaving the substrate exposed to air for a certain period of time. Alternatively, the substrate may be exposed to heat subsequent to the application of the composition to accelerate drying of the substrate and/or to cause curing of the applied composition if desired or necessary. When exposed to a heat temperature, the substrate may be guided through an oven and the temperature of heat treatment may be between 100 and 200°C, typically between 120 and 180°C.

The invention is further illustrated with reference to the following examples without however the intention to limit the invention thereto.

### EXAMPLES

### Test methods

### Spray rating (SR)

The spray rating of a treated substrate is a value indicative of the dynamic repellency of the treated substrate to water that impinges on the treated substrate. The repellency was measured by Test Method 22-1996, published in the 2001 Technical Manual of the American Association of Textile Chemists and Colorists (AATCC), and was expressed in terms of a 'spray rating' of the tested substrate. The spray rating was obtained by spraying 250 ml water on the substrate from a height of 15 cm. The wetting pattern was visually rated using a 0 to 100 scale, where 0 means complete wetting and 100 means no wetting at all.

### Oil Repellency (OR)

The oil repellency of a substrate was measured by the American Association of Textile Chemists and Colorists (AATCC) Standard Test Method No. 118-1983, which test was based on the resistance of a treated substrate to penetration by oils of varying surface tensions. Treated substrates resistant only to Nujol® mineral oil (the least penetrating of the test oils) were given a rating of 1, whereas treated substrates resistant to heptane (the most penetrating of the test liquids) were given a rating of 8. Other intermediate values were determined by use of other pure oils or mixtures of oils, as shown in the following table.

| Standard Test Liquids | |
|---|---|
| AATCC Oil Repellency Rating Number | Compositions |
| 1 | Nujol® |
| 2 | Nujol® /n-Hexadecane 65/35 |
| 3 | n-Hexadecane |
| 4 | n-Tetradecane |
| 5 | n-Dodecane |
| 6 | n-Decane |
| 7 | n-Octane |
| 8 | n-Heptane |

### Bundesmann Test

The impregnating effect of rain on treated substrates was determined using the Bundesmann Test Method (DIN 53888). In this test, the treated substrates were subjected to a simulated rainfall, while the back of the substrate was being rubbed. The appearance of the upper exposed surface was checked visually after 1, 5 and 10 minutes and was given a rating between 1 (complete surface wetting) and 5 (no water remains on the surface). Besides the observation of the wetting pattern, also the water absorption (% abs) was measured. Well-treated samples gave low absorption results.

### Water Repellency Test (WR)

The water repellency (WR) of a substrate was measured using a series of water-isopropyl alcohol test liquids and was expressed in terms of the "WR" rating of the treated substrate. The WR rating corresponded to the most penetrating test liquid which did not penetrate or wet the substrate surface after 15 seconds exposure. Substrates which were penetrated by or were resistant only to 100% water (0% isopropyl alcohol), the least penetrating test liquid, were given a rating of 0, whereas substrates resistant to 100% isopropyl alcohol (0% water), the most penetrating test liquid, were given a rating of 10. Other intermediate ratings were calculated by dividing the percent isopropylalcohol in the test liquid by 10, e.g., a treated substrate resistant to a 70%/30% isopropyl alcohol/water blend, but not to an 80%/20% blend, would be given a rating of 7.

### Abbreviations

Nalco™1056 : 35% colloidal silica dispersion in water (particle size 20 nm), with an Al₂O₃ shell, available from Nalco Chemical Co.
Nalco™2329 : anionic colloidal silica (particle size 75 nm), available from Nalco Chemical Co.
Disperal P2: Al₂O₃ powder with a primary particle size of 25 nm available from Sasol VCL2: vinylidene chloride
ODMA: octadecylmethacrylate
MGLY: methoxypolyethylene glycol 350 methacrylate
FC-1: 30% solids aqueous dispersion comprising a fluorochemical acrylate having the following monomer composition C₄F₉SO₂N(CH₃)CH₂CH₂OCOC(CH₃)=CH₂ / VCL2 / ODMA/MGLY (weight ratio: 45/25/30/0.1) and an emulsifier system of 2% Arquad™ C-12 / 5.4% Tergitol™ TMN-6 and 2% Tergitol™ 15S30 based on fluorochemical acrylate solids.
MIBK: methyl isobutyl ketone (4-methyl 2-pentanone)
PES/CO (2681.4) : Grey polyester/cotton 65/35, style No. 2681.4, obtained from Utexbel N.V., Ronse, Belgium
PAµ (7819.4) : Polyamide microfiber, style No. 7819.4, obtained from Sofinal, Belgium
PES (0030.1) : polyester, style No. 0030.1, obtained from Sofinal, Belgium
PESµ : polyester moss microfiber peach effect (sanded), available from San Laing Surface Fabric co.
PA : polyamide taffeta (190 or 210 yam fiber) for apparel, available from Sunny Specific Mill
Arquad™ C-12: cocobis(2-hydroxyethyl)methylammonium chloride surfactant from Akzo Nobel
Tergitol™ TMN-6: polyethylene glycol trimethylnonyl ether surfactant from Rohm & Haas
Tergitol™ 15S30: alcohol ethoxylate surfactant from Rohm & Haas

### Preparation of Disperal P2 Al₂O₃ dispersion

To 90 g deionized water were added 10 g Disperal P2 Al₂O₃ powder. The mixture was stirred for 1 hr with a magnetic stirring bar. A slightly hazy 10% Al₂O₃ particle dispersion was obtained.

### Preparation of a iso-octyl modified silica dispersion

284 grams of Nalco™ 2329 (35.2% silica in water) was mixed with 3.75 grams of isooctyl trimethoxy silane. 500 grams of 1-methoxy-2-propanol was slowly added to this mixture while stirring. Finally, 3.0 grams of a 5% aqueous hydrofluoric acid solution was added slowly under vigorous stirring. This mixture was placed in a 250 ml bottle and sealed. The bottle was placed in a 90°C oven and allowed to react for 21 hours. The bottle was removed from the oven and the contents were pouring into a glass tray. The tray was placed in a 50°C oven for 4 hours. A dry white powder was obtained.

10 g iso-octyl modified silica particles (particle size:75 nm) were dissolved into 18.6 g MIBK at 75°C. This solution was added to a hot aqueous solution of 0.27g Ethoquad™ C-12, 0.30 g Tergitol™ 15S30 and 0.60g Tergitol™ TMN-6 in 25.8 g deionized water while stirring. This premix was subjected to ultra-sound for 2 minutes using a Branson 450 sonifier. MIBK was distilled of with a Büchi rotary evaporator to obtain a stable, milky dispersion.

### Examples 1 to 3 and comparative example C-1

In example 1, a treatment bath was prepared by diluting 150 g FC-1 to 5 l with tap water. 2ml/l 60% acetic acid was added as well as 0.5g/l Nalco™1056. PA (taffeta) was run on a Butterworth padder via a continuous loop through the treatment bath. The bath stability and roll build up were observed during a 1 hour run (speed : 25 m/min ; pressure : 80 psi). No deposits on the rolls were observed after 1 hour run. Example 2 was made in the same way, but the colloidal silica was added to the concentrated FC-1 prior to the formulation of the treatment bath. No roll build up was observed.
In example 3, a treatment bath was prepared containing 30g/l FC-1, 2ml/l 60% acetic acid and 1g/l Nalco™1056. PESµ was treated in a Butterworth padder as described above. No roll build up was observed after 1 hour run.
In comparative example C-1, the same experiment was repeated for the treatment of PA taffeta, but without addition of colloidal silica to the treatment bath. Severe roll build up was observed after a one hour run.

### Examples 4 to 6 and comparative example C-2

In examples 4 to 6, polyester substrates were run on a Butterworth padder via a continuous loop through a bath containing 150 g FC-1, 4850 g tap water, 10 ml 60% acetic acid and various levels of Nalco™1056 as indicated in table 1. The substrates were run through the bath so as to obtain an add-on level of fluorochemical treating agent of 0.3% SOF (solids on fabric). Comparative example C-2 was made with a treatment bath without colloidal silica. The treated substrates were dried and cured at 160°C during 1.5 min. The oil and water repellency properties were measured and the results are given in table 1.

**Table 1:**

| PES (0030.1) treated with cationic fluorochemical treating agent and Nalco™1056 | | | | | | | | |
|---|---|---|---|---|---|---|---|---|
| Ex No | % Nalco™ 1056* | Initial | | | Bundesmann | | | |
| | | OR | WR | SR | 1' | 5' | 10' | % abs |
| 3 | 1.9 | 2 | 3 | 100 | 4 | 2 | 1 | 17.9 |
| 4 | 3.9 | 2 | 3 | 100 | 3 | 1 | 1 | 22.0 |
| 5 | 7.8 | 2 | 3 | 90 | 3 | 1 | 1 | 24.4 |
| 6 | 15.6 | 2 | 3 | 90 | 1.5 | 1 | 1 | 26.6 |
| C-2 | / | 1 | 3 | 90 | 2.5 | 1 | 1 | 23.6 |
| Note : % Nalco™1056* : based on 100% fluorochemical solids | | | | | | | | |

As can be concluded from the results, the addition of cationic colloidal silica to the treatment bath comprising a cationic fluorochemical dispersion, did not influence the oil and water repellent properties of the substrates treated therewith.

### Examples 7 to 10 and comparative example C-3

In examples 7 to 10, the same experiment was repeated with other substrates as indicated in table 2. Comparative example C-3 was made with a treatment bath without colloidal silica. The treated substrates were dried and cured at 160°C during 1.5 min. The oil and water repellency properties of the treated substrates are given in table 2.

**Table 2 :**

| oil and water repellent properties of PAµ | | | | | | | | | | |
|---|---|---|---|---|---|---|---|---|---|---|
| Ex | % Nalco™ 1056* | PAµ (7819.5) | | | PES/CO (2681.4) | | | PA | | |
| | | OR | WR | SR | OR | WR | SR | OR | WR | SR |
| 7 | 1.9 | 2 | 3 | 75 | 2 | 3 | 90 | 0 | 2 | 80 |
| 8 | 3.9 | 2 | 3.5 | 75 | 2 | 3 | 80 | 0 | 2 | 75 |
| 9 | 7.8 | 2 | 3 | 70 | 2 | 3 | 80 | 0 | 2 | 75 |
| 10 | 15.6 | 2 | 3 | 75 | 2 | 3 | 80 | 0 | 2 | 75 |
| C-3 | / | 3 | 4 | 80 | 2 | 3 | 100 | 1.5 | 2 | 80 |
| Note : % Nalco™1056* : based on 100% fluorochemical solids | | | | | | | | | | |

Also these experiments indicated that the addition of cationic colloidal silica to the cationic fluorochemical treatment bath did not influence the oil and water repellency properties of substrates treated therewith.

### Examples 11 to 12

In example 11, a treatment bath was prepared by diluting 150 g FC-1 to 5 l with tap water. 2ml/l 60% acetic acid was added as well as 7g/l Disperal P2 10% solids Al₂O₃ dispersion (25 nm; prepared as described above). PA (taffeta) was run on a Butterworth padder via a continuous loop through the treatment bath. The bath stability and roll build up were observed during a 1 hour run (speed : 25 m/min ; pressure : 80 psi). Only a few small deposit spots were observed after 1 hour run.

Example 12 was made in the same way, but here a cationic iso-octyl modified silica dispersion (primary particle size 75 nm; prepared as described above) was used. No roll build up was observed.

## Claims

1. A composition comprising an aqueous dispersion of a fluorochemical compound and a cationic surfactant wherein the composition further comprises colloidal inorganic particles.

2. A composition according to claim 1 wherein said colloidal inorganic particles are cationic colloidal inorganic particles.

3. A composition according to claim 1 or 2 wherein said colloidal inorganic particles have a particle size between 1 and 100 nm.

4. A composition according to claim 2 or 3 wherein said cationic colloidal inorganic particles comprise cationic colloidal silica particles.

5. A composition according to any of the previous claims wherein the amount of said colloidal inorganic particles is between 0.25 and 25 parts by weight per 100 parts by weight of said fluorochemical compound.

6. A composition according to any of the previous claims wherein the total amount of solids in the composition is between 0.5 and 40% by weight.

7. A composition according to any of the previous claims wherein said cationic surfactant comprises an ammonium surfactant.

8. A composition according to any of the previous claims wherein said fluorochemical compound comprises a polymer of (a) one or more fluorinated monomers having a non-fluorinated ethylenically unsaturated group and optionally one or more non-fluorinated monomers.

9. A composition according to any of the previous claims wherein said composition has a pH of less than 7.

10. A method of treatment comprising applying a composition as defined in any of claims 1 to 9 to a fibrous substrate.

11. A method according to claim 10 wherein said composition is contained in a bath through which said fibrous substrate is guided so as to apply the composition to said fibrous substrate and wherein said fibrous substrate is guided through one or more rolls.

12. A method according to any of claims 10 or 11 wherein an effective amount of said fluorochemical compound is applied to said fibrous substrate so as to provide oil-and/or water repellency properties to said fibrous substrate.

13. A method according to any of claims 11 to 12 wherein said fibrous substrate comprises textile or a non-woven fabric.
